# EUROPEAN PATENT APPLICATION

(11) **EP 1 462 159 A2**
(43) Date of publication of application: **29.09.2004**
(21) Application number: 04075560.5
(22) Date of filing: 20.02.2004
(51) Int. Cl.: B01J 19/00, H01M 8/06

(54) **Integrated fuel reformer and heat exchanger**

(30) Priority: 12.03.2003 US 454069 P
(71) Applicant: Delphi Technologies, Inc., Troy, MI 48007 (US)
(72) Inventor: O'Brien, John F., Lockport, NY 14094 (US); Oddi, Frederick Vincent, Orchard Park, NY 14127 (US)
(74) Representative: Denton, Michael John

(57) **Abstract**

An integrated exothermic hydrocarbon fuel reformer (12) and heat exchanger (14) is a compact, modular structure in which reaction air pre heating for the ambient air and simultaneous cooling for the hydrogen rich reformate is provided by a nested series of alternating reformate passages (42) and air passages (44) created by a corrugated fin (38) brazed between inner and outer concentric walls (32 and 34). The reformer outer wall (22) and air pre heating exchanger outer wall (34) may be a common structure. In addition, a secondary heat exchanger (16) of similar structure may be abutted to the primary heat exchanger (14) for further reformate cooling and further waste heat recovery.

## Description

### TECHNICAL FIELD

This invention relates to fuel reformers of the type that convert hydrocarbon fuel to hydrogen reformate, and specifically to such a reformer uniquely integrated with one or more heat exchangers.

### BACKGROUND OF THE INVENTION

The recent increased interest in hydrogen fuel cell vehicles has focused interest on the possible sources of hydrogen fuel. The most basic issue is whether a new infrastructure to provide ready-to-use hydrogen will be provided, or, in the alternative, a means to create hydrogen from the existing hydrocarbon fuel infrastructure. The primary proposal for the latter is the use of reforming technology, either on board each vehicle or as a new infrastructure itself, to chemically convert hydrocarbon fuel, such as gasoline, to hydrogen. The hydrogen so provided could have uses beyond the fuel cell itself, such as direct burning in an IC engine to reduce emissions at cold start or to create faster exhaust catalyst warm-up.

The two fundamental divisions of hydrocarbon fuel reforming are the endothermic, sometimes by means of steam reforming, and exothermic. In the latter, a hydrocarbon fuel source and oxygen, most conveniently from ambient air, are injected into a catalyst bed within a reaction chamber and combusted under controlled conditions to create a very high temperature hydrogen reformate gas, often referred just as reformate. Because of its high temperature, it is preferred to cool the reformate before its introduction as fuel to a device such as an IC engine. It is also preferred to pre heat the ambient air before its introduction into the reformer reaction chamber, for optimal reformate quality, in terms of both increased hydrogen production and/or lower hydrocarbon content.

Standard industry practice has been to provide additional heat exchangers, not integrated with the reformer, to provide both heat transfer functions, that is, post reaction cooling of the reformate, and pre reaction heating of the ambient air. In U.S. Patent 6,608,463, assigned to the assignee of this invention, a reformer combined and integrated with several heat exchangers designed to utilize waste heat is disclosed. A reforming air pre heater consists of a combustor built into the reformer that bums so called tail gas, an exhaust gas containing unburned hydrocarbons produced from the fuel cell stack. Part of a stream of incoming ambient air is diverted and run past the combustor, in heat exchanging relationship, before being fed back into the reaction chamber of the reformer. Overall, the mechanisms and structures are quite complex, and meant to be suitable for controlling the temperature in either and exothermic or endothermic mode of operation.

### SUMMARY OF THE INVENTION

The invention provides a significantly simplified combined and integrated fuel reformer and air pre heater, used in just an exothermic mode. A counter flow air pre heater uses just the heat of out flowing reformate from the reaction chamber, in an integrated counter flow heat exchanger, with no need for separate combustors or complex mechanisms to route and control the inflow of ambient air. In addition, a downstream reformate cooling heat exchanger of similar design may be added to the same structure. The overall package is compact as well as simple, making optimal use of shared, commonly sized structures and minimal volume.

In the preferred embodiment disclosed, a reformer has a generally cylindrical reaction chamber, containing the fuel injector, igniter and catalyst that allows the injected fuel to be reformed in the controlled oxygen conditions that exothermically produce the hydrogen reformate. The reaction chamber is surrounded by an annular, double walled manifold with a ported inner wall that feeds ambient air into the reaction chamber.

A generally cylindrical heat exchanger is abutted with the reformer, and structurally tied at one end thereto. The heat exchanger has an annular fin chamber that is generally coaxial to the reformer manifold, with continuous, corrugated, conductive material fin is held tightly between inner and outer walls thereof. The fin creates axially extending air flow passages in conjunction with the outer wall, and discrete reformate passages in conjunction with the inner wall, nested with the air flow passages. The reformate flow passages are open at one end to the reformer reaction chamber, while the air flow passages are open to the reformer manifold space. At the opposite end, the reformate flow passages are open to an exit port from the heat exchanger, and the air flow passages are open to an ambient air inlet. Blocking structures at the ends of the heat exchanger walls and fin prevent any cross flow between the air and reformate flow passages.

In operation, hot reformate exits the reformer and enters the reformate flow passages, flowing toward and ultimately out the exit port, where it may be fed directly into a device that utilizes it, or into a secondary heat exchanger for further cooling. Concurrently, ambient air enters the air flow passages and flows in the opposite direction, toward the reaction chamber manifold, and heat flows continuously across the fin walls from the hot reformate to the relatively cooler air. This is doubly effective, since the reaction efficiency benefits from the ambient air pre heating, and the reformate needs to be cooled before being further utilized. The heat exchange occurs over substantially the entire length of the heat exchanger, within a compact and closely coupled structure, and no additional combustors are needed. A secondary, reformate cooling heat exchanger, may, if desired, be abutted to the primary heat exchanger, as an extension of the same basic passage, and with a similar structure. A secondary coolant, such as water/glycol, may be used for space heating purposes in a vehicle, for example, and the further cooled reformate may be even more suitable for introduction into an internal combustion engine.

### BRIEF DESCRIPTION OF THE DRAWINGS

Figure 1 is a cross sectioned perspective view of a reformer, air pre heating heat exchanger, and secondary reformate cooling heat exchanger in combination;
Figure 2 is an enlarged perspective view of one axial end of a heat exchanger fin chamber;
Figure 3 is a schematic view showing the concurrent flows of reformate, ambient air, and secondary coolant, in operation.

### DESCRIPTION OF THE PREFERRED EMBODIMENT

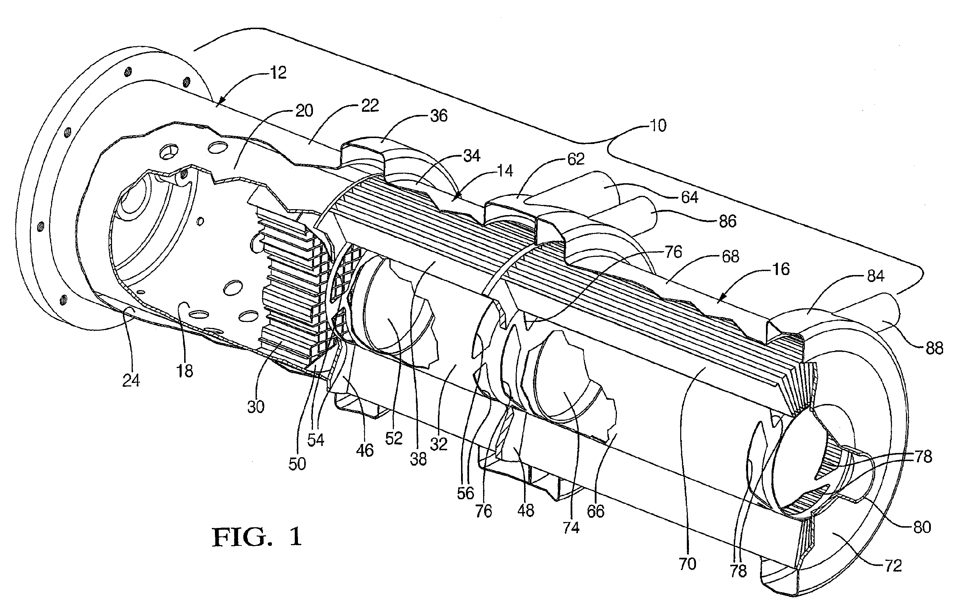

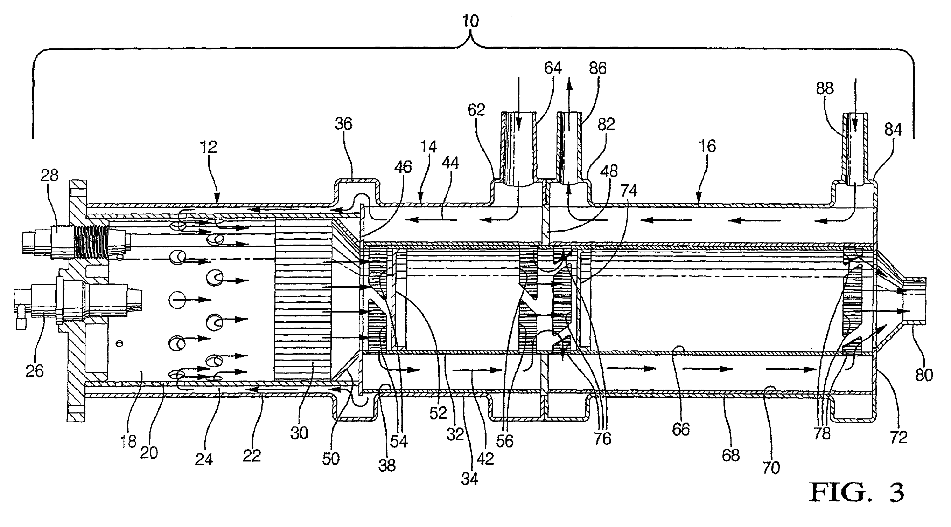

Referring first to Figures 1 and 3, a preferred embodiment of the invention, indicated generally at 10, includes a reformer, indicated generally at 12, a primary, air pre heating heat exchanger, indicated generally at 14, and a secondary, reformate cooling heat exchanger, indicated generally at 16. All three basic structures, 12, 14, and 16, are basically elongated, abutted cylinders, residing substantially within a common envelope. Each is formed from welded or brazed high temperature resistant metal, and either shares common components or components of similar type and size, so as to create a compact and simplified package, both in terms of structure and operational fluid flow. Reformer 12 has a central reaction chamber 18, surrounded by a ported inner wall 20 and solid outer wall 22 that form an annular air manifold space 24. At one end, a conventional fuel injector 26 and igniter 28 (shown in Figure 3 only) supply and combust a suitable hydrocarbon fuel, such as gasoline or methanol, within the controlled and limited oxygen atmosphere which, in conjunction with a catalyst 30 at the opposite axial end, produce hydrogen reformate, as well as some level of carbon oxides, in a highly exothermic reaction. Ambient air is introduced into the reaction chamber 18 in a fashion described in more detail below. After passing through the catalyst 30, reformate next flows out the opposite end to a primary heat exchanger 14, as described next.

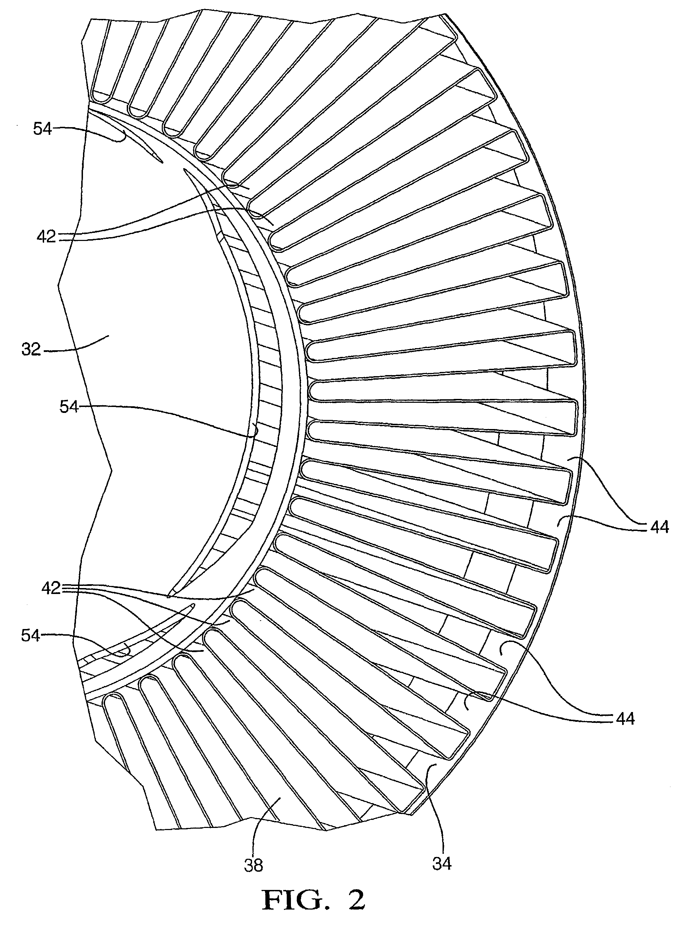

Referring next to Figures 1, 2 and 3, the primary or air preheating heat exchanger 14 includes an inner wall 32 and a concentric outer wall 34 which, in the embodiment shown, is structurally integral with, and approximately equal in diameter to, the reformer outer wall 22. A three hundred and sixty degree flared channel 36 formed at the juncture between the two outer walls 22 and 34 axially overlaps with both of the adjacent ends of the manifold space 24 and the primary heat exchanger inner wall 32. As best seen in Figure 2, a continuous, corrugated and heat conductive fin 38, with axially extending corrugations, is joined tightly between the two walls 32 and 34. This creates an array of axially extending reformate flow passages 42, discrete from and nested with an array of co extensive air flow passages 44, all running axially end to end of the primary heat exchanger 14. The opposed axial ends of the flow passages 42 and 44 are blocked by annular rings 46 and 48, preventing cross flow between them. The terminal edge of reformer inner wall 20 is brazed and sealed to the surface of annular ring 46, thereby keeping the manifold space 24 discrete from the reaction chamber 18. In addition, a frustoconical baffle 50 is joined to the inner surface of reformer inner wall 20 and the inner edge of annular ring 46, to smoothly transition reformate flow out of the reaction chamber 18. The common outer walls 22 and 34, as well as the mutual brazing of the annular ring 46, reformer inner wall 20, inner wall 32 and fin 38, all comprise a structural connection between the abutted axial ends of the reformer 12 and primary heat exchanger 14.

Still referring to Figures 1, 2 and 3, the fluid flow in the reformate passages 42 is determined by a blocking plate 52 inset from the end of the heat exchanger inner wall 32 that is adjacent to reformer 12. Upstream of plate 52 is a series of circumferential cut outs 54. At the opposite end of heat exchanger inner wall 32 is a matching series of circumferential cut outs 56, as best seen in Figure 2. The cutouts 54 and 56 are trapezoidal in shape, rather than rectangular, so as to be incapable of totally blocking any flow passage. The fluid flow in the air passages 44 is determined by the flared channel 36 at one end, and a similar channel 62 at the opposite end which is also open to a stub pipe inlet 64. The details of secondary heat exchanger 16 are described below, after next describing the fluid flows in just the reformer 12 and primary heat exchanger 14.

Referring next to Figure 3, ambient air is pumped under pressure through pipe 64, around channel 62 and into one end of all of the air flow passages 44. Air then flows along the passages 44 to the opposite end, into the channel 36, into the manifold space 24 and ultimately through the ported inner wall 20 and into reaction chamber 18. Also concurrently, the pressurized flow of reformate formed in reaction with the air so introduced flows axially along the baffle 50, and is forced by the blockage of plate 52 through the cut outs 54 and into the reformate flow passages 42, where it flows axially counter to the air flow and ultimately out of the cut outs 56 and out of the primary heat exchanger 14. In the embodiment disclosed, reformate then flows into the secondary heat exchanger 16, as described below, but it could flow out simply to a supply line, if no further cooling were needed. During the concurrent axial counter flow of ambient air and reformate through the nested passages 44 and 42 respectively, heat is continually transferred across the fin 38, from the exothermically created reformate, with an entering temperature of about 650 degrees C, to the ambient air, with an entering temperature of about 38 degrees C. This heat transferring counter flow occurs over essentially the entire length of the fin 38 and of the primary heat exchanger 14. In the process, the ambient air can be preheated to approximately 343 degrees C, and the reformate cooled to approximately 467 degrees C. Making the fin 38 and heat exchanger 14 longer or otherwise enhancing the heat transfer surface of fin 38, or both, would provide more concurrent air pre heating and reformate cooling, if desired. As noted above, the air pre heating enhances the efficiency of reformate creation, and enhances the overall system efficiency if the energy for the pre heating is otherwise "free" or waste heat, which is the case here, since the reformate needs to be cooled. The air pre heating provided is very simple and compact, both structurally and operationally, as compared to the system described above, since the ambient air enters in a simple, continuous and straight path, and it is preheated just by the exiting flow of the reformate, without the need to provide separate combustors or other structure.

Referring again to Figure 1, the secondary, reformate cooling heat exchanger 16 may be briefly described, since it basically mirrors the construction of the are primary heat exchanger 14, even sharing some components to give a modular construction, in effect. Secondary heat exchanger 16 is arrayed along the same coaxial path, and abuts the primary heat exchanger 14, so as to constitute a virtual extension of it, with an inner wall 66 that is similar to the primary inner wall 32, a concentric outer wall 68 of approximately equal diameter to the primary outer wall 34, and a corrugated fin 70 similar to fin 38 brazed between the two walls. This creates similar fluid flow passages for reformate on one side and nested, coextensive flow passages for a secondary coolant on the other side, which are not separately illustrated. These would appear just like the flow passages in Figure 2, and the flow passages so formed are blocked by the shared annular ring 48 at one end, and another annular ring 72 at the opposed end, so as to prevent flow passage cross flow. Fluid flow in the reformate passages is similarly determined, by a blocking plate 74 inset from one end of inner wall 66, a series of circumferential cutouts 76 upstream of plate 74, a matching set of circumferential cut outs 78 at the opposite end, and a reformate outlet 80 downstream of the cut outs 78. Likewise, flow in the coolant passages is distributed by outwardly flared circumferential channels 82 and 84 at the opposite ends of outer wall 68, with channel 82 abutting channel 62 of primary heat exchanger 14. Each channel 82 and 84 is open to stub pipes 86 and 88 respectively. The inner walls 32 and 66, the common annular ring 48, and the abutted channels 62 and 82 all constitute structural ties between the primary heat exchanger 14 and secondary heat exchanger 16.

Referring again to Figures 1 and 3, the further cooling flow of reformate through secondary heat exchanger 16 is illustrated. After exiting primary heat exchanger 14, reformate, blocked by plate 74, is forced into the cut outs 76, into the reformate flow passages formed between the inner wall 66 and fin 70, and then flows axially to the opposite end, out of the cut outs 78, and ultimately out of the outlet 80. Concurrently, a suitable secondary coolant, such as water/glycol, enters the pipe 88, flows around the channel 84, into the flow passages formed between the outer wall 68 and the fin 70, and then flows concurrently in the opposite axial direction to the reformate before entering the opposite channel 82 and exiting pipe 86. During the concurrent axial counter flow, heat is transferred from the relatively hotter reformate to the secondary coolant, across the common fin 70, thereby cooling the reformate even further, to approximately 130 degrees C, and rendering it even more suitable for introduction into a device such as an internal combustion engine. The heat picked up by the secondary coolant can be used for another purpose, such as vehicle space heating.

In conclusion an operationally simple, structurally efficient and compact unit is provided. Fluid flows are direct and straight between the closely coupled structures, reducing pressure losses, and maximizing heat transfer. The overall structural plan of an extended cylinder, with additional modules being added end to end, allows for maximum component sharing, as well as a compact package. Even more downstream heat exchangers could be added for additional reformate cooling, or the secondary heat exchanger 16 could be lengthened for the same purpose. There are other possibilities for component sharing within the framework of the basic structure disclosed. The nested, co axially extending reformate and air flow passages could be provided by other structures, such as an extruded shell with internal walls, divided up into discrete passages, everyone of which would be fed with reformate and the remainder with air. The two wall, contained corrugated fin structure is particularly economical, however, and simple to feed with flow by use of the circumferential cut outs and the three hundred and sixty degree channels, which channels also can serve to structurally tie the outer envelope together. The function of the annular rings could be replaced by stamping the channels of the outer walls with integral, radially inwardly extending annular flanges, and a common outer stamping could potentially provide all of the outer walls.

## Claims

1. A combination (10) of a hydrocarbon fuel to hydrogen reformer of the exothermic type using fuel and oxygen from the ambient air to produce hydrogen reformate and an integrated heat exchanger, comprising,
a substantially cylindrical reformer (12) having an interior reaction chamber (18) containing a fuel injector (26), an igniter (28) and a catalyst bed (30) within which chamber (18) hydrogen reformate is exothermically formed in reaction with ambient air, said reformer (12) also having an ambient air manifold space (24) surrounding said reaction chamber (18) that admits air into said reaction chamber (18), and,
a substantially cylindrical heat exchanger (14) substantially coaxial to said reformer (12 ), adjacent at one end to said reformer (12) and structurally joined therewith, said heat exchanger (14) having axially extending reformate passages (42) and coextensive, nested ambient air passages (44) arrayed in mutually heat conductive fashion, said reformate flow passages (42) being open at one end to the reaction chamber (18) and open at the opposite end to a reformate exit port (56) from said heat exchanger (14), said air flow passages (44) being open at one end to said reformer manifold space and open at the opposite end to ambient air,
whereby, oxygenated ambient air entering the ambient air passages (44) moves in one axial direction, into the reformer manifold space (24) and into the reaction chamber (18) to create hydrogen reformate, said reformate concurrently moving axially in the opposite direction out of said reaction chamber (18) and through said heat exchanger reformate passages (42), in continuous heat exchanging relationship, with said oppositely flowing ambient air, across said conductive fin (38) over substantially the entire axial length of said heat exchanger (14), so that said ambient air is continually warmed before reaching the reaction chamber (18), and the reformate is continually cooled before exiting the heat exchanger (14).

2. A combined (10) reformer and heat exchanger according to Claim 1, further **characterized in that**,
said reformate passages (42) and air passages (44) are formed by concentric, inner (32) and outer (34) walls between which a continuous, corrugated, heat conductive fin (38) is contained.

3. A combined (10) reformer and heat exchanger according to Claim 2, further **characterized in that**,
said manifold space (24) has an outer wall (22) integral with said heat exchanger outer wall (34).

4. A combined (10) reformer and heat exchanger according to Claim 3, further **characterized in that**,
said heat exchanger (14) is abutted with a generally cylindrical and coaxial secondary heat exchanger (16) of similar construction having an inner wall (66) integral with the inner wall (32).
